# FASCICULE DE BREVET EUROPEEN

(11) **EP 0 853 449 B1**
(45) Date de publication et mention de la délivrance du brevet: **06.04.2005**
(21) Numéro de dépôt: 96932671.9
(22) Date de dépôt: 27.09.1996
(51) Int. Cl.: A01N 25/00, A01N 47/02, A01N 43/56

(54) **APPATS EMPOISONNES CONTENANT DES N-PHENYL- OU N-PYRIDYLPYRAZOLES POUR CONTROLER LES INSECTES NUISIBLES**
N-PHENYL-ODER N-PYRIDYLPYRAZOLE ENTHALTENDE GIFTKÖDER ZUR BEKÄMPFUNG LASTIGER INSEKTEN
POISON BAITS CONTAINING N-PHENYL OR N-PYRIDYL PYRAZOLES FOR CONTROLLING INSECT PESTS

(30) Priorité: 27.09.1995 JP 24944495
(43) Date de publication de la demande: 22.07.1998
(73) Titulaire: BASF Agro B.V., Arnhem (NL), Wädenswil-Branch, 8820 Wädenswil/Au (CH)
(72) Inventeur: SUGIURA, Masaaki, Fumakilla Limited Co., Sahaku-gun, Hiroshima-ken (JP); SUGIYAMA, Takashi,Fumakilla Limited Co., Sahaku-gun, Hiroshima-ken (JP)
(74) Mandataire: Köster, Reinhold, Dr.
(86) Numéro de dépôt international: PCT/FR1996/001519
(87) Numéro de publication internationale: WO 1997/011602

(56) Documents cités:
- EP-A- 0 254 257
- EP-A- 0 295 117
- EP-A- 0 500 209
- EP-A- 0 794 701
- EP-A- 0 794 702
- EP-A- 0 818 952
- EP-A- 0 836 386
- EP-A- 0 836 387
- EP-A- 0 840 549
- EP-A- 0 881 881
- EP-A- 0 892 605
- EP-A- 0 915 654
- EP-A- 0 915 655
- WO-A-91/00007
- WO-A-91/07972
- WO-A-91/17656
- WO-A-96/32014
- FR-A- 2 599 591
- FR-A- 2 713 889
- DATABASE WPI Section Ch, Week 9049 Derwent Publications Ltd., London, GB; Class C03, AN 90-364822 XP002019886 & JP,A,02 262 501 (EARTH SEIYAKU KK) , 25 Octobre 1990
- DATABASE CROPU STN-International STN-accession no. 96-88693, XP002019885 & JP,A,08 175 910 (SUMITOMO) 9 Juillet 1996
- DATABASE WPI Section Ch, Week 9242 Derwent Publications Ltd., London, GB; Class A97, AN 92-343785 XP002019887 & JP,A,04 247 003 (OSAKA SEIYAKU KK) , 3 Septembre 1992

## Description

L'invention concerne des appâts empoisonnés pour contrôler des insectes nuisibles.

L'invention souhaite mettre à la disposition des utilisateurs des appâts empoisonnés pour la lutte contre les insectes nuisibles, possédant d'excellentes propriétés attractives et appâtantes ainsi qu'une haute efficacité contre différents insectes que l'on souhaite contrôler par l'utilisation des appâts empoisonnés.

L'invention concerne des appâts empoisonnés utilisables pour contrôler les parasites nuisibles, et notamment les insectes, constitués d'un agent se gélifiant par hydratation et contiennent comme matière active un dérivé du 1-arylpyrazole de formule générale (l) : 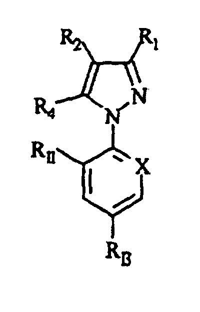 dans laquelle:
R₁ représente un radical CN ou méthyle ou un atome d'halogène ;
R₂ représente S(O)ₙR₃ ou un radical 4,5-dicyanoimidazol 2-yl ou haloalkyle ;
R₃ représente un radical alkyle ou haloalkyle ;
R₄ représente l'hydrogène, ou un atome d'halogène, ou un radical choisi parmi les radicaux suivants : NR₅R₆, S(O)ₘR₇, C(O)R₇, C(O)OR₇, alkyle, haloalkyle, OR₈,et N=C(R₉)(R₁₀);
R₅ et R₆ représentent indépendamment l'un de l'autre un atome d'hydrogène ou un radical alkyle, haloalkyle, C(O)alkyle, alkoxycarbonyle ou S(O)ᵣCF₃ ; ou bien R₅ et R₆ peuvent former ensemble un radical alkylène divalent qui peut être interrompu par un ou plusieurs hétéroatomes divalents tels que l'oxygène ou le soufre ;
R₇ représente un radical alkyle ou haloalkyle;
R₈ représente un radical alkyle ou haloalkyle ou un atome d'hydrogène ;
R₉ représente un radical alkyle ou un atome d'hydrogène ;
R₁₀ représente un radical phényle ou hétéroaryle qui peut éventuellement être non substitué ou substitué par un ou plusieurs atomes d'halogène ou un radical choisi parmi les radicaux suivants : -OH, -O-alkyle, -S-alkyle, cyano, et alkyle ;
R₁₁ et R₁₂ représentent, indépendamment l'un de l'autre, l'hydrogène ou un atome d'halogène, ou un radical CN ou NO₂,
R₁₃ représente un atome d'halogène ou un radical haloalkyle, haloalcoxy, S(O)_{q}CF₃ ou SF₅ ;
X représente un atome d'azote trivalent ou un radical C-R₁₂, les trois autres valences de l'atome de carbone faisant partie du noyau aromatique ;
m, n et q représentent, indépendamment les uns des autres, un nombre entier égal à 0, un ou deux ;
à condition que, si R₁ représente un radical méthyle, alors soit R₃ représente un radical haloalkyle, R₄ représente NH₂, R₁₁ représente Cl, R₁₃ représente CF₃ et X représente N ; soit R₂ représente un radical 4,5-dicyanoimidazoly 2-Yl R₄ représente Cl, R₁₁ représente Cl, R₁₃ représente CF₃, et X représente =C-Cl.

Les radicaux alkyle contiennent en général de 1 à 6 atomes de carbone.

Un groupe préféré des 1-arytpyrazolzes selon l'invention est celui dans lequel :
R₁ représente CN ; R₃ représente un radical haloalkyle ; R₄ représente NH₂ ; X représente C-R₁₂;
R₁₁ et R₁₂ représentent, indépendamment l'un de l'autre, un atome d'halogène; et
R₁₃ représente un radical haloalkyle.

Un composé particulièrement préféré est le 5-amino-1-(2,6-dichloro-4-(trifluorométhylphényl)-4-trifluorométhylsulfinyl-3-cyanopyrazole, désigné par "composé (A)", dans la suite de la description. Le composé (A) peut être préparé par les procédés décrits dans la demande de brevet Européen A-0295117.

Les composés de formule générale (I) peuvent être préparés selon des procédés connus, par exemple ceux décrits dans les demandes de brevet international N°^{S} WO 87/3781, 93/6089, et 94121606 ainsi que dans les demandes de brevets Européens 295117, 403300, 385809 ou 679650, la demande de brevet allemand 19511269 et les brevets U.S. N°^{S} 5232940 et 5236938 ou par d'autres procédés connus par l'homme de l'art compétent dans la synthèse chimique notamment à travers les publications faites dans le Chemical Abstract et dans la littérature à laquelle ces ouvrages se réfèrent. Les compositions contenant les composés de formule générale (I) peuvent aussi être préparées selon les méthodes de l'art antérieur ou selon des méthodes similaires.

On peut utiliser par exemple, comme agent gélifiant selon l'invention les produits suivant : la gome Gellan, l'agar agar, la gélatine, la gomme de caroube, la gomme xanthane, la gomme de jelutong les gommes de polysaccharides. Ces agents gélifiants peuvent être utilisés seuls ou en mélange de deux ou plus, dans des rapports quelconques entre eux. La gomme Gellan est la gomme préférée. La gomme Gellan est un polyssacharide naturel isolé des cultures de Pseudomonas Elodea et contient du glucose, de l'acide glucoronique et du rhamnose. Elle est aussi commercialisée sous la marque déposée Kelcogel de Kelco Company. Les brevets rotatifs à la gomme Gellan ont été publiés dans les demandes de brevet japonais S55-79397 déposée le 14 juin 1980 (préparation), S59-88051 déposée le 21 mai 1984 (compositions alimentaires), S60-11501 déposée le 21 janvier 1985 (gomme gel non chauffée).

Cette invention concerne aussi un procédé de préparation d'appâts empoisonnés qui comprend la préparation d'une composition liquide contenant l'agent gélifiant, de l'eau et un composé de formule générale (I), puis la solidification de la composition liquide pour former un gel. L'agent gélifiant hydraté peut être préparé par exemple, en mélangeant un agent gélifiant et de l'eau, en rendant le mélange liquide par chauffage à une température comprise habituellement entre 40 et 90°C et en le solidifiant par refroidissement.

Les appâts empoisonnés utilisables selon l'invention, pour contrôler des parasites nuisibles, par exemple, des insectes, peuvent par exemple, être préparées en mélangeant l'agent gélifiant et de l'eau, en rendant le mélange liquide par chauffage, et en ajoutant le composé de formule générale (I), ainsi par exemple qu'un agent attractif, une substance appâtante, ou d'autres adjuvants si nécessaire, et en le solidifiant par refroidissement. Les produits ainsi obtenus peuvent être formulés sous n'importe quelle forme désirable en les plaçant dans un moule approprié pendant le processus de refroidissement et de solidification. Ils peuvent en outre mis sous une forme quelconque par des procédés incluant la coupe, le broyage etc., après solidification.

Le rapport pondéral entre l'agent gélifiant et l'eau est en général compris entre 0,001 : 99,999 et 50 : 50.

Dans la présente description, les pourcentages sont, sauf indication contraire, des pourcentages pondéraux.

Les appâts empoisonnés pour la lutte contre les parasites nuisibles, par exemple, des insectes, conformes à la présente invention contiennent en général une substance attractive et une substance appâtante. Comme substance appâtante, on peut citer par exemple, les poudres de céréales telles que la poudre de blé, la poudre de maïs, la poudre de riz, le son de riz, etc., des amidons tels que l'amidon de pomme de terre, l'amidon de maïs etc., des sucres tels que le maltose, l'arabinose, le galactose, le lactose, le sorbitose, le glucose, des molasses, du miel, etc., et de la glycérine, etc. Comme substance attractive on peut citer par exemple des acides gras tels que l'acide caprylique, l'acide caproïque, l'acide caprique, l'acide laurique, l'acide oléique, etc., des alcools supérieurs tels que l'alcool octylique, l'alcool dodécylique, l'alcool oléique, etc., et des arômes tels que l'arôme d'oignon, l'arôme de lait, l'arôme de beurre, etc.

Les appâts empoisonnés pour la lutte contre les insectes nuisibles, conformes à la présente invention peuvent contenir comme autres agents adjuvants une substance stabilisante, une substance répulsive pour les espèces que l'on ne veut pas voir dévorer les appâts, une substance colorante, un agent antiseptique etc. Comme agent stabilisant on peut par exemple, citer un sel de calcium tel que le lactate de calcium, le chlorure de calcium, etc. Comme substance répulsive, on peut citer, par exemple, des substances piquantes ou amères telles que la poudre de poivre de Guinée, le benzoate de dinatonium, etc. Comme agent colorants, on peut citer, par exemple, le Rouge N° 2, le Rouge N° 102, le Jaune N° 4, le Jaune N° 5, le caramel, etc. Comme agents antiseptiques, on peut citer, par exemple, l'acide sorbique, les sorbinates, les esters de l'acide paraoxybenzoïque, etc.

Dans les appâts empoisonnés pour la lutte contre les parasites nuisibles, par exemple des insectes, conformes à la présente invention, la teneur en composé de formule générale (I) est en général comprise entre 1x10⁻⁵ et 50 % , la teneur en agent gélifiant est en général comprise entre 1x10⁻³ et 99,99 %, la teneur en agents attractifs et appâtants est en général comprise entre 1x10⁻³ et 99,99% et la teneur en autres adjuvants comprise entre 0 et 99,99 %.

En outre les appâts empoisonnés pour la lutte contre les parasites nuisibles, par exemple, des insectes, peuvent contenir, outre le composé de formule générale (I), d'autres matières actives insecticides.

Les appâts empoisonnés pour la lutte contre les parasites nuisibles, par exemple des insectes, conformes à la présente invention peuvent être utilisés pour contrôler différents insectes en les plaçant dans les lieux ou vivent, ou sur les lieux de passage, des insectes nuisibles, soit sous forme d'appâts empoisonnés seuls, soit en les plaçant dans des récipients appropriés.

Parmi les parasites nuisibles susceptibles d'être détruits, on peut citer non seulement des insectes tels que les blattes et notamment les blattes germaniques (Blatella germanica), les blattes brun fumé (Periplaneta fuliginosa), des mouches telles que la mouche domestique, des fourmis telles que Formica fusca japonica, Tetramorium cacspitum, Lasius niger, Monomorium pharanois, Crematogaster laboriosa, Pristomyrmex pungens, Monomorium nipponense, Pheidole nodus, Brachyponcra chinensis, Camponotus japonicus, Iridomyrmex itoi, la fourmi de feu, la fourmi de Carpenter, mais aussi différents arthropodes et notamment des crustacés tels que des armidillidia et notamment Armidillidium vulgare etc. Bien que les doses d'emploi des appâts empoisonnés utilisables pour lutter contre les parasites nuisibles, par exemple, des insectes, puissent varier en fonction des espèces visées, des conditions où elles se manifestent, etc., on peut indiquer cependant que les doses de composé de formule (I) à utiliser sont, par exemple, comprises entre 1x10⁻⁴ et 500 mg par 100 m² dans le cas d'applications dans des maisons, par exemple pour lutter contre les blattes, et dans le cas d'applications faites à l'extérieur, par exemple contre des fourmis ou contre des Armadillidia. Les doses de composé de formule (I) dans les appâts sont généralement comprises entre 1x10⁻⁴ et 500 mg par appât.

La présente invention peut être expliquée plus en détails par quelques exemples d'applications.

Les exemples qui suivent sont des exemples de préparations de formulations utilisables selon l'invention.

### Exemple de préparation 1

1g de gomme Gellan et 68,7g d'eau ont été mélangés puis chauffés à 80-90°C sous agitation pour donner une solution homogène ; 0,1g de composé (A) et 0,2g de lactate de calcium ont alors été ajoutés sous agitation, puis 30 g de miel toujours sous agitation ; le mélange obtenu a été versé dans un cylindre de 3,0cm de diamètre, refroidis et solidifiés pour donner des appâts empoisonnés.

### Exemple de préparation 2

Les appâts empoisonnés pour la lutte contre les insectes nuisibles peuvent être préparés par la même méthode que celle décrite dans l'exemple de préparation 1, à la seule exception que l'on a utilisé 0,01g de composé (A) au lieu de 0.1g.

### Exemple de préparation 3

Les appâts empoisonnés pour la lutte contre les insectes nuisibles peuvent être préparés par la même méthode que celle décrite dans l'exemple de préparation 1, à la seule exception que l'on a utilisé 0,001g de composé (A) au lieu de 0,1g.

Les exemples suivants sont des exemples d'essais.

### Exemple d'essai N°1

On a placé dans un récipient en résine acrylique ( 25cm x 25cm x 10cm) une cage en bois, de l'eau, de la nourriture solide et des appâts empoisonnés ; 90 femelles adultes de blattes germaniques ont alors été introduites.

Le nombre de blattes germaniques mortes a été compté périodiquement. Les résultats sont donnés dans le tableau 1.

En outre, et à titre de comparaison, les résultats obtenus avec des appâts empoisonnés (Exemple de comparaison 1) préparés en mélangeant 0,1g de composé (A), 30g de miel, 20g de purée de pomme de terre et 10g de son de riz, sont également donnés dans le tableau 1.

**Tableau 1**

| Nombre d'insectes morts | | | |
|---|---|---|---|
| Temps (heures) | Exemple de préparation 1 | Exemple de préparation 2 | Exemple de comparaison 1 |
| 6 | 62 | 44 | 20 |
| 9 | 83 | 80 | 51 |
| 12 | 88 | 84 | 68 |
| 24 | 90 | 89 | 80 |
| 27 | | 90 | 80 |
| 30 | | | 82 |
| 48 | | | 88 |
| 72 | | | 90 |

### Exemple d'essai N°2

On a placé dans un récipient en résine acrylique ( 25cm x 25cm x 10cm) une cage en bois, de l'eau, de la nourriture solide et des appâts empoisonnés ; 30 femelles adultes de blattes bruns fumé (Periplaneta fuliginosa) ont alors été introduites.

Le nombre de blattes brun fumé mortes a été compté périodiquement. Les résultats sont donnés dans le tableau 2.

En outre, et à titre de comparaison, les résultats obtenus avec des appâts empoisonnés (Exemple de comparaison 1) préparés en mélangeant 0,1g de composé (A), 30g de miel, 20g de purée de pomme de terre et 10g de son de riz, sont également donnés dans le tableau 2.

**Tableau 2**

| Nombre d'insectes morts | | | |
|---|---|---|---|
| Temps (heures) | Exemple de préparation 1 | Exemple de préparation 2 | Exemple de comparaison 1 |
| 9 | 22 | 1 | 0 |
| 12 | 24 | 7 | 1 |
| 24 | 28 | 26 | 15 |
| 30 | 30 | 27 | 15 |
| 48 | | 27 | 21 |
| 72 | | 30 | 25 |
| 96 | | | 27 |

### Exemple d'essai N°3

On a placé dans un récipient en plastique (dont le fond mesurait 9 cm de diamètre) une cage en bois, de l'eau, de la nourriture solide et des appâts empoisonnés ; 60 adultes de Pristomyrmex pungens ont alors été introduits.

Le nombre d'insectes (Pristomyrmex pungens) morts a été compté périodiquement. Les résultats sont donnés dans le Tableau 3

**Tableau 3**

| Nombre d'insectes morts | | | |
|---|---|---|---|
| Temps (heures) | Exemple de préparation 1 | Exemple de préparation 2 | Exemple de comparaison 1 |
| 24 | 51 | 43 | 7 |
| 48 | 60 | 58 | 20 |
| 72 | | 60 | 52 |
| 96 | | | 60 |

### Exemple d'essai N°4

On a placé dans un récipient en résine acrylique (25cm x 25cm x 10cm) une certaine quantité de terre, une caisse de porcelaine, de l'eau, des feuilles de choux, et des appâts empoisonnés ; 50 adultes de Armadillidium vulgare ont alors été introduits.

Le nombre d'insectes (Armadillidium vulgare) morts a été compté périodiquement. Les résultats sont donnés dans le Tableau 4

**Tableau 4**

| Nombre d'insectes morts | | |
|---|---|---|
| Temps heures) | Exemple de préparation 1 | Exemple de préparation 2 |
| 1 | 21 | 24 |
| 2 | 40 | 39 |
| 3 | 46 | 45 |
| 4 | 49 | 46 |
| 5 | 50 | 48 |
| 6 | | 50 |

Comme on peut le voir, à la lecture des différents résultats des essais, les appâts empoisonnés pour la lutte contre les insectes nuisibles, conformes à la présente invention donnent une excellente efficacité pour lutter les différents parasites nuisibles, par exemple, des insectes. En outre, comme on peut le voir à partir des résultats des exemples de comparaison, les appâts empoisonnés selon l'invention ont une bien meilleure efficacité que celle des formulations de référence contenant la même quantité de la matière [ composé de formule générale (1)].

Les appâts empoisonnés pour la lutte contre les parasites nuisibles, par exemple, des insectes, conformes à la présente invention donnent une excellente efficacité pour lutter les différents parasites nuisibles par exemple, des insectes.

## Revendications

1. Un appât mis en forme utilisable pour contrôler les parasites nuisibles, et notamment les insectes, comprenant :
- de l'eau
- un agent se gélifiant par hydratation qui est la gomme Gellan, l'agar agar, la gélatine, la gomme de caroube, la gomme xanthane, la gomme de jelutong ou les gommes de polysaccharides, le rapport entre l'agent gélifiant et l'eau étant compris entre 0,001 : 99,999 et 50 : 50 en poids;
- et, comme matière active, un composé de formule générale (I) : 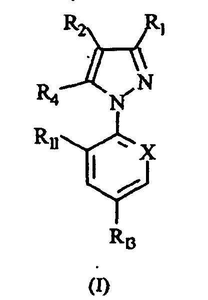
dans laquelle :
R₁ représente un radical CN ou méthyle ou un atome d'halogène;
R₂ représente S(O)ₙR₃ ou un radical 4,5-dicyanoimidazol 2-yl ou haloalkyle;
R₃ représente un radical alkyle ou haloalkyle ;
R₄ représente l'hydrogène, ou un atome d'halogène, ou un radical choisi parmi les radicaux suivants : NR₅R₆, S(O)ₘR₇, C(O)R₇, C(O)OR₇, alkyle, haloalkyle, OR₈, et N=C(R₉)(R₁₀) ;
R₅ et R₆ représentent indépendamment l'un de l'autre un atome d'hydrogène ou un radical alkyle, haloalkyle, C(O)alkyle, alkoxycarbonyle ou S(O)ᵣCF₃ ; ou bien R₅ et R₆ peuvent former ensemble un radical alkylène divalent qui peut être interrompu par un ou plusieurs hétéroatomes divalents tels que l'oxygène ou le soufre ;
R₇ représente un radical alkyle ou haloalkyle ;
R₈ représente un radical alkyle ou haloalkyle ou un atome d'hydrogène ;
R₉ représente un radical alkyle ou un atome d'hydrogène ;
R₁₀ représente un radical phényle ou hétéroaryle qui peut éventuellement être non substitué ou substitué par un ou plusieurs atomes d'halogène ou par un radical choisi parmi les radicaux suivants : -OH, -O-alkyle, -S-alkyle, cyano, et alkyle ;
R₁₁ et R₁₂ représentent, indépendamment l'un de l'autre, l'hydrogène ou un atome d'halogène, ou un radical CN ou NO₂,
R₁₃ représente un atome d'halogène ou un radical haloalkyle, haloalcoxy, S(O)_{q}CF₃ ou SF₅ ;
X représente un atome d'azote trivalent ou un radical C-R₁₂, les trois autres valences de l'atome de carbone faisant partie du noyau aromatique ;
m, n et q représentent, indépendamment les uns des autres, un nombre entier égal à 0, un ou deux ;
à condition que, si R₁ représente un radical méthyle, alors soit R₃ représente un radical haloalkyle, R₄ représente NH₂, R₁₁ représente Cl, R₁₃ représente CF₃ et X représente N ; soit R₂ représente un radical 4,5-dicyanoimidazoly 2-yl R₄ représente Cl, R₁₁ représente Cl, R₁₃ représente CF₃, et X représente =C-Cl.

2. Un appât selon la revendication 1 dans lequel :
R₁ représente CN ; R₃ représente un radical haloalkyle ; R₄ représente NH₂ ; X représente C-R₁₂;
R₁₁ et R₁₂ représentent, indépendamment l'un de l'autre, un atome d'halogène ; et
R₁₃ représente un radical haloalkyle.

3. Un appât selon la revendication 1 dans lequel le composé de formule générale (1) est le 5-amino-1-(2,6-dichloro-4-(trifluorométhylphényl)-4-trifluorométhylsulfinyl-3-cyanopyrazole, dénommé composé (A).

4. Un appât selon la revendication 1 dans lequel les parasites sont des insectes.

5. Un appât selon l'une quelconque des revendications précédentes **caractérisé en ce que** l'agent se gélifiant par hydratation est la gomme Gellan.

6. Un appât selon l'une quelconque des revendications précédentes qui contient entre 1x10⁻⁵ et 50 % du composé de formule générale (I), entre 1x10⁻³ et 99,99 % d'agent gélifiant hydraté, de 1x10⁻³ à 99,99% d'agent attractif ou appâtant, et entre 0 et 99,99 % d'autres adjuvants.

7. Un procédé de préparation d'un appât empoisonné selon la revendication 1 qui comprend la préparation d'une composition liquide contenant un agent gélifiant, de l'eau et le composé (A) et la solidification de la composition liquide pour donner un gel.

8. Un procédé de contrôle des parasites en un lieu qui comprend l'utilisation d'un appât empoisonné selon la revendication 1.

9. Un procédé de contrôle des parasites selon la revendication 10 dans lequel on met en oeuvre le composé de formule (I) à des doses comprises entre 1x10⁻⁴ et 500 mg par 100 m².

10. Un procédé de contrôle des parasites selon la revendication 10 dans lequel on met en oeuvre le composé de formule (I) à des doses comprises entre 1x10⁻⁴ et 500 mg par appât.

## Patentansprüche

1. Geformter Köder, der zur Bekämpfung von Schadparasiten und insbesondere Insekten verwendet werden kann, enthaltend:
- Wasser;
- ein durch Hydratation gelierendes Mittel, bei dem es sich um Gellangummi, Agar-Agar, Gelatine, Johannisbrotkernmehl, Xanthangummi, Jelutonggummi oder Polysaccharidgummen handelt, wobei das Gewichtsverhältnis zwischen Geliermittel und Wasser zwischen 0,001:99,999 und 50:50 liegt;
- und als Wirkstoff eine Verbindung der allgemeinen Formel (I): 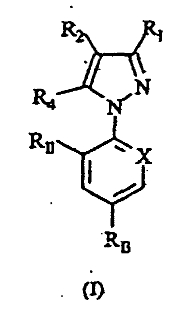
worin:
R₁ für einen CN- oder Methylrest oder ein Wasserstoffatom steht;
R₂ für S(O)ₙR₃ oder einen 4,5-Dicyanoimidazol-2-yl- oder Halogenalkylrest steht;
R₃ für einen Alkyl- oder Halogenalkylrest steht; R₄ für Wasserstoff, ein Halogenatom oder einen unter den folgenden Resten ausgewählten Rest steht: NR₅R₆, S(O)ₘR₇, C(O)R₇, C(O)OR₇, Alkyl, Halogenalkyl, OR₈ und N=C(R₉) (R₁₀) ;
R₅ und R₆ unabhängig voneinander für ein Wasserstoffatom oder einen Alkyl-, Halogenalkyl-, C(O)-Alkyl-, Alkoxycarbonyl- oder S(O)ᵣCF₃-Rest stehen oder R₅ und R₆ gemeinsam einen divalenten Alkylenrest bilden, der durch ein oder mehrere divalente Heteroatome, wie Sauerstoff oder Schwefel, unterbrochen sein kann;
R₇ für einen Alkyl- oder Halogenalkylrest steht;
R₈ für einen Alkyl- oder Halogenalkylrest oder ein Wasserstoffatom steht;
R₉ für einen Alkylrest oder ein Wasserstoffatom steht;
R₁₀ für einen Phenyl- oder Heteroarylrest steht, der gegebenenfalls durch ein oder mehrere Halogenatome oder einen unter den folgenden Resten ausgewählten Rest substituiert sein kann: -OH, -O-Alkyl, -S-Alkyl, Cyano und Alkyl;
R₁₁ und R₁₂ unabhängig voneinander für Wasserstoff, ein Halogenatom oder einen CN- oder NO₂-Rest stehen;
R₁₃ für ein Halogenatom oder einen Halogenalkyl-, Halogenalkoxy-, S(O)_{q}CF₃- oder SF₅-Rest steht;
X für ein trivalentes Stickstoffatom oder einen C-R₁₂-Rest, wobei die anderen drei Valenzen des Kohlenstoffatoms Teil des aromatischen Kerns sind, steht;
m, n und q unabhängig voneinander für eine ganze Zahl mit einem Wert von null, eins oder zwei stehen;
mit der Maßgabe, daß für den Fall, daß R₁ für einen Methylrest steht, entweder R₃ für einen Halogenalkylrest steht, R₄ für NH₂ steht, R₁₁ für Cl steht, R₁₃ für CF₃ steht und X für N steht; oder R₂ für einen 4,5-Dicyanoimidazol-2-ylrest steht, R₄ für Cl steht, R₁₁ für Cl steht, R₁₃ für CF₃ steht und X für =C-Cl steht.

2. Köder nach Anspruch 1, bei dem:
R₁ für CN steht; R₃ für einen Halogenalkylrest steht; R₄ für NH₂ steht, X für C-R₁₂ steht;
R₁₁ und R₁₂ unabhängig voneinander für ein Halogenatom stehen und
R₁₃ für einen Halogenalkylrest steht.

3. Köder nach Anspruch 1, bei dem es sich bei der Verbindung der allgemeinen Formel (I) um 5-Amino-1-(2,6-dichlor-4-(trifluormethylphenyl)-4-trifluormethylsulfinyl-3-cyanopyrazol, das als Verbindung (A) bezeichnet wird, handelt.

4. Köder nach Anspruch 1, bei dem es sich bei den Parasiten um Insekten handelt.

5. Köder nach einem der vorhergehenden Ansprüche, **dadurch gekennzeichnet, daß** es sich bei dem durch Hydratation gelierenden Mittel um Gellangummi handelt.

6. Köder nach einem der vorhergehenden Ansprüche, der zwischen 1 x 10⁻⁵ und 50% der Verbindung der allgemeinen Formel (I), zwischen 1 x 10⁻³ und 99,99% hydratisiertes Geliermittel, 1 x 10⁻³ bis 99,99% Lock- oder Köderstoff und zwischen 0 und 99,99% andere Hilfsstoffe enthält.

7. Verfahren zur Herstellung eines Giftköders nach Anspruch 1, bei dem man eine ein Geliermittel, Wasser und die Verbindung (A) enthaltende flüssige Zusammensetzung herstellt und die flüssige Zusammensetzung zu einem Gel verfestigt.

8. Verfahren zur Bekämpfung von Parasiten an einem Ort, bei dem man einen Giftköder nach Anspruch 1 verwendet.

9. Verfahren zur Bekämpfung von Parasiten nach Anspruch 8, bei dem man die Verbindung der Formel (I) in Dosen zwischen 1 x 10⁻⁴ und 500 mg pro 100 m² verwendet.

10. Verfahren zur Bekämpfung von Parasiten nach Anspruch 8, bei dem man die Verbindung der Formel (I) in Dosen zwischen 1 x 10⁻⁴ und 500 mg pro Köder verwendet.

## Claims

1. Shaped bait which can be used for controlling harmful parasites, in particular insects, comprising
- water
- an agent which gels upon hydration, being Gellan gum, agar agar, gelatine, carob gum, xanthan gum, jelutung gum or polysaccharide gums, the ratio between gelling agent and water being between 0.001:99.999 and 50:50 by weight; and, by way of active material, a compound of general formula (I): 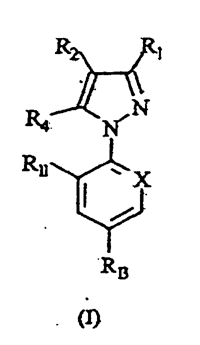
in which:
R₁ represents a CN or methyl radical or a halogen atom;
R₂ represents S(O)ₙR₃ or a 4,5-dicyanoimidazol-2-yl or haloalkyl radical
R₃ represents an alkyl or haloalkyl radical;
R₄ represents hydrogen, a halogen atom or a radical selected from amongst the following radicals: NR₅R₆, S(O)ₘR₇, C(O)R₇, C(O)OR₇, alkyl, haloalkyl, OR₈ and N=C(R₉)(R₁₀) ;
R₅ and R₆ independently of one another represent a hydrogen atom or an alkyl, haloalkyl, C(O)alkyl, alkoxycarbonyl or S(O)ᵣCF₃ radical; or else R₅ and R₆ together can form a divalent alkylene radical which can be interrupted by one or more divalent hetero atoms such as oxygen or sulphur;
R₇ represents an alkyl or haloalkyl radical;
R₈ represents an alkyl or haloalkyl radical or a hydrogen atom;
R₉ represents an alkyl radical or a hydrogen atom;
R₁₀ represents a phenyl or heteroaryl radical which can optionally be unsubstituted or substituted by one or more halogen atoms or by a radical selected from amongst the following radicals: -OH, -O-alkyl, -S-alkyl, cyano and alkyl;
R₁₁ and R₁₂ independently of one another represent hydrogen, a halogen atom or a CN or NO₂ radical,
R₁₃ represents a halogen atom or a haloalkyl, haloalkoxy, S(O)_{q}CF₃ or SF₅ radical;
X represents a trivalent nitrogen atom or a C-R₁₂ radical, the three other valencies of the carbon atom forming part of the aromatic nucleus;
m, n and q independently of one another represent an integer equalling 0, one or two;
with the proviso that, if R₁ represents a methyl radical, then either R₃ represents a haloalkyl radical, R₄ represents NH₂, R₁₁ represents Cl, R₁₃ represents CF₃ and X represents N; or R₂ represents a 4,5-dicyanoimidazoly 2-yl radical, R₄ represents Cl, R₁₁ represents Cl, R₁₃ represents CF₃ and X represents =C-Cl.

2. Bait according to Claim 1, in which:
R₁ represents CN; R₃ represents a haloalkyl radical; R₄ represents NH₂; X represents C-R₁₂;
R₁₁ and R₁₂ independently of one another represent a halogen atom; and
R₁₃ represents a haloalkyl radical.

3. Bait according to Claim 1, in which the compound of general formula (I) is 5-amino-1-(2,6-dichloro-4-(trifluoromethylphenyl)-4-trifluoromethyl-sulphinyl-3-cyanopyrazole, named compound (A).

4. Bait according to Claim 1, in which the parasites are insects.

5. Bait according to any one of the preceding claims, in which the agent which gels upon hydration is Gellan gum

6. Bait according to any one of the preceding claims, which comprises between 1 × 10⁻⁵ and 50% of the compound of general formula (I), between 1 × 10⁻³ and 99.99% of gelling agent, from 1 × 10⁻³ to 99.99% of attractant or baiting agent, and between 0 and 99.99% of other adjuvants.

7. Process for the preparation of a poisoned bait according to Claim 1, which comprises preparing a liquid composition comprising a gelling agent, water and compound (A) and solidifying the liquid composition to form a gel.

8. Method of controlling parasites in a place which comprises the use of a poisoned bait according to Claim 1.

9. Method of controlling parasites according to Claim 10, in which use is made of the compound of formula (I) at doses between 1 × 10⁻⁴ and 500 mg per 100 m².

10. Method of controlling parasites according to Claim 10, in which use is made of the compound of formula (I) at doses between 1 × 10⁻⁴ and 500 mg per bait.
